# EUROPÄISCHE PATENTSCHRIFT

(11) **EP 0 808 877 B1**
(45) Veröffentlichungstag und Bekanntmachung des Hinweises auf die Patenterteilung: **17.09.2003**
(21) Anmeldenummer: 96109908.2
(22) Anmeldetag: 20.06.1996
(51) Int. Cl.: C08L 95/00, C09D 195/00

(54) **Zur Beschichtung von Blechen bestimmte Masse**
Composition for the coating of metallic plates
Composition de recouvrement de tôles

(30) Priorität: 23.05.1996 DE 19620800
(43) Veröffentlichungstag der Anmeldung: 26.11.1997
(73) Patentinhaber: CWW-GERKO Akustik GmbH, 67547 Worms (DE)
(72) Erfinder: Bildner, Karlheinz, Dipl.-Ing., 63589 Linsengericht-Grossenhausen (DE); Kornacki, Zdislaw, 60314 Frankfurt (DE)
(74) Vertreter: Schlagwein, Udo, Dipl.-Ing.

(56) Entgegenhaltungen:
- EP-A- 0 617 098
- DE-A- 3 209 151
- DE-A- 3 932 033
- DE-A- 4 029 729

## Beschreibung

Die Erfindung betrifft eine zur Beschichtung von Blechen, beispielsweise Karosserieblechen von Kraftfahrzeugen, bestimmte lösungsmittelfreie Masse auf Basis von Bitumen, Polymeren und/oder Wachs sowie Glimmer, welche der Schalldämmung, Entdröhnung und dem Korrosionsschutz dient.

Eine solche Masse ist in der EP-A-0 617 098 beschrieben. Diese Masse ist so zusammengesetzt, daß sie bei Temperaturen unter 140°C als PKW-Unterbodenschutz auf Bodenbleche in einem Arbeitsgang gespritzt werden kann. Hierzu ist die Masse für das Heißspritzen ausreichend fließfähig, verläuft jedoch nach dem Auftreffen auf das Blech nicht, weil anderenfalls keine ausreichend dicke und dadurch akustisch wirksame Schicht entstehen würde.

Bei manchen Bauteilen ist ihre zu beschichtende Oberfläche durch Spritzen nicht erreichbar. Das ist beispielsweise der Fall, wenn man als Längsträger dienende Hohlprofile eines Kraftfahrzeugs innenseitig beschichten will. Man könnte dann daran denken, die Masse durch Fluten solcher Hohlprofile aufzubringen, da es üblich ist, Hohlprofile mit Wachs zu fluten und dann das Wachs aus den Hohlprofilen laufen zu lassen, um die Hohlprofile innenseitig mit einer Korrosionsschutzschicht aus Wachs zu überziehen.

Die bisher zur Verfügung stehenden akustisch wirksamen Massen sind jedoch für eine Beschichtung durch Fluten oder Eintauchen der zu beschichtenden Teile in ein Bad ungeeignet, da die in solchen Massen erforderlichen, akustisch wirksamen Stoffe die Fließfähigkeit zu stark einschränken. Die Antidröhnmasse nach der EP-A-0 617 098 hat zwar so große thixotrope Eigenschaften, daß sie durch Spritzen verarbeitet werden kann, ist jedoch im Zustand der Ruhe kaum noch fließfähig.

Der Entwicklung akustisch wirksamer, fließfähiger Massen stehen sich widersprechende Erfordernisse gegenüber. Um an schwer zugängliche Stellen gelangen zu können, müssen die Massen möglichst dünnflüssig sein. Um an den mit der Masse in Berührung gekommenen Flächen eine akustisch ausreichend wirksame Beschichtungsdicke zu erreichen, müssen die Massen möglichst dickflüssig sein. Hinzu kommt, daß die Massen einen hohen Korrosionsschutz bieten sollen und die mit ihnen erzeugte Beschichtung auch bei höheren Temperaturen nicht fließen darf. In Hohlprofilen von Kraftfahrzeugen ist beispielsweise im Sommer bei starker Sonneneinstrahlung mit Temperaturen bis über 60°C zu rechnen, so daß die Gefahr eines Weichwerdens groß ist. Umgekehrt muß die Beschichtung im Winter auch bei starken Minustemperaturen, üblicherweise rechnet man im Automobilbau mit Temperaturen von bis zu -20°C, noch akustisch wirksam sein.

Der Erfindung liegt das Problem zugrunde, eine lösungsmittelfreie Masse zu entwickeln, welche ausreichend fließfähig ist, um zu anders nicht zugänglichen Stellen gelangen zu können, und welche auf mit ihr in Berührung gekommenen Flächen eine akustisch wirksame Beschichtung erzeugt.

Dieses Problem wird erfindungsgemäß dadurch gelöst, daß die Masse 40 - 60 Gew.-% Bitumen, 0,5 - 10 Gew.-% Polymere, 5- 20 Gew.-% eines Gemisches aus meheren Wachsen, walche einen Schmelzpunkt im Bereich von 75°C bis 105°C aufweisen, 5 - 15 Gew.-% Harz, 0,5 - 3 Gew.-% Aluminium sowie 5 - 20 Gew.-% Glimmer enthält.

Eine solche Masse eignet sich insbesondere dazu, Hohlprofile von Kraftfahrzeugen durch Fluten und anschließendes Herauslaufenlassen der flüssigen Masse innenseitig mit einer akustisch hochwirksamen Schicht zu überziehen. Deshalb kann man zum Beispiel Längsträger mit dieser Masse beschichten, so daß es zu einer wirksamen Dämpfung der über die Längsträger aus dem Motorraum zum Fahrgastraum hin übertragenen Schwingungen und Geräusche kommt. Die erfindungsgemäße Masse ist sehr leicht zu verarbeiten und kann mit 125°C in auf 60 bis 80°C vorgewärmte Hohlprofile geflutet werden. Sie ist bei dieser Temperatur ähnlich dünnflüssig wie Wasser, so daß sie zuverlässig auch verwinkelte, enge Bereiche erreicht, was für den zugleich angestrebten Korrosionsschutz wichtig ist. Ein an einem mit der erfindungsgemäßen Masse beschichteten Teil durchgeführter Salzsprühtest nach DIN von 480 Stunden Dauer zeigte keinerlei Mängel der Beschichtung.

Die gute Fließfähigkeit der Masse kommt überwiegend durch das Bitumen und die Wachse zustande, während das Harz dafür sorgt, daß eine ausreichend dicke Schicht an den mit der flüssigen Masse in Berührung gekommenen Flächen haftet und diese Schicht auch bei Dauerbeanspruchung sich nicht löst. Die Polymere und der Glimmer führen in der Masse zu den vorteilhaften akustischen Dämpfeigenschaften. Das Aluminium in der Masse sorgt dafür, daß der Wärmeausdehnungskoeffizent der Masse in etwa dem des mit ihr zu beschichtenden Stahlbleches entspricht. Dadurch kommt es nicht zu Dehnungsspannungen, wodurch die mit der Masse erzeugte Beschichtung abplatzen könnte. Weiterhin wird durch das Aluminium eine gute Wärmeleitfähigkeit der Masse herbeigeführt. Dadurch ist die Masse in der Lage, bei Berührung der mit ihr zu beschichtenden, kälteren Flächen sich über ihre gesamte Dicke rasch abzukühlen. Diese schnelle Wärmeabgabe an das zu beschichtende Blech ermöglicht relativ dicke Schichten, ohne daß dabei die Schicht ungleich wird und durch Verlaufen der Masse Nasen entstehen. Aluminium hat in der Masse zusätzlich den Vorteil, leicht zu sein, so daß es in der flüssigen Masse nicht sedimentiert. Weiterhin ist es als feines Pulver kostengünstig erhältlich.

Die erfindungsgemäße Masse kann statt durch Fluten von zu beschichtenden Teilen auch dadurch aufgebracht werden, daß man die Teile in ein Bad mit der Masse eintaucht. Die Anwendung ist nicht auf den Automobilsektor beschränkt. Sinnvoll ist es beispielsweise auch, Hohlprofile von Brücken mit der erfindungsgemäßen Masse zu-beschichten, um beim Befahren der Brücken entstehende Geräusche zu dämpfen und um die Profile gleichzeitig vor Korrosion zu schützen.

Die Masse ist besonders kostengünstig herstellbar, wenn sie gemäß einer Weiterbildung der Erfindung zur Reduzierung des Glimmeranteils bis zu 50 Gew.-% Füllstoffe, wie Kreide oder Sand, enthält. Die Teilchengröße sollte für alle Feststoffe unter 200 µm liegen.

Eine optimale Fließfähigkeit ergibt sich, wenn als Bitumen ein Gemisch aus Destillationsbitumen B15 und B180 vorgesehen ist und die Masse zusätzlich bis 4 Gew.-% Mineralöl enthält. Bei einem solchen Bitumen B15 beträgt die Eindringtiefe bei der Nadelpenetration nach DIN 25 1/10 mm (Nadelgewicht 100 g, Dauer 5 s, Temperatur 25°C), während der Erweichungspunkt nach dem Ring- und Kugel-Test bei 67 bis 72°C liegt. Bei Bitumen B180 beträgt bei gleichen Bedingungen die Penetration 160 - 210 1/10 mm und der Erweichungspunkt 37 bis 44°C. Durch das Mineralöl wird die Kältehaftung bei tiefen Temperaturen erhöht. Insbesondere wird dadurch verhindert, daß bei Minusgraden die Masse infolge von Schwingungen oder beim Auftreffen von Steinen abplatzen kann.

Die Eigenschaften der Masse sind besonders günstig, wenn als Polymere ein Gemisch aus Ethylen/Vinylacetat-Copolymer und Polymeren des Vinylacetats vorgesehen ist.

Die Viskosität der Masse wird durch Verändern der Anteile verschiedener Wachssorten den jeweiligen Erfordernissen angepaßt, indem als Wachse ein Gemisch aus mehreren Wachsen vorgesehen ist, welche einen Schmelzpunkt im Bereich von 75°C bis 105°C aufweisen.

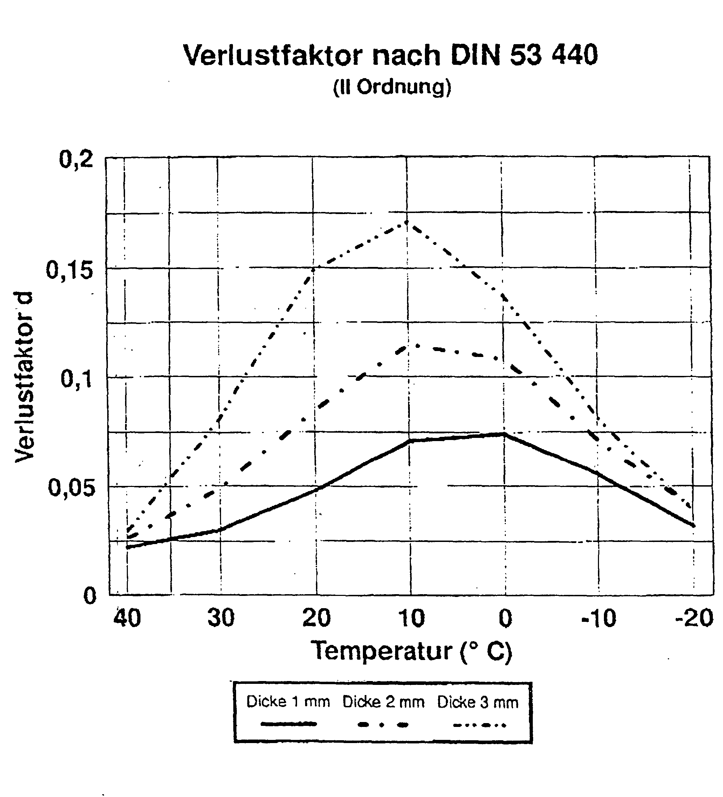

In der Zeichnung ist ein Diagramm wiedergegeben, welches den Verlustfaktor d nach DIN 53 440 (II Ordnung) eines mit der erfindungsgemäßen Masse innenseitig beschichteten Blechprofils über die bei Kraftfahrzeugen auftretenden Temperatur bei Schichtdicken von 1 mm, 2 mm und 3 mm zeigt. Das Diagramm verdeutlicht die starke Zunahme des Verlustfaktors mit der Schichtdicke.

## Patentansprüche

1. Zur Beschichtung von Blechen, beispielsweise Karosserieblechen von Kraftfahrzeugen, bestimmte, der Schalldämmung, Entdröhnung und dem Korrosionsschutz dienende, lösungsmittelfreie Masse, welche bei einer Temperatur von 125 °C in auf 60 bis 80 °C vorgewärmte Hohlprofile zu fluten vermag und welche 40 - 60 Gew.-% Bitumen, 0,5-10 Gew.-% Polymere, 5 - 20 Gew.-% eines Gemisches aus mehreren Wachsen, welche einen Schmelzpunkt im Bereich von 75 °C bis 105 °C aufweisen, 5 - 15 Gew.-% Harz, 0,5-3 Gew.-% Aluminium sowie 5 - 20 Gew.-% Glimmer enthält.

2. Masse nach Anspruch 1, **dadurch gekennzeichnet, dass** die Masse zur Reduzierung des Glimmeranteils bis zu 50 Gew.-% Füllstoffe, wie Kreide oder Sand, enthält.

3. Masse nach den Ansprüchen 1 oder 2, **dadurch gekennzeichnet, dass** als Bitumen ein Gemisch aus Destillationsbitumen B15 und B180 vorgesehen ist und die Masse zusätzlich bis 4 Gew.-% Mineralöl enthält.

4. Masse nach zumindest einem der vorangehenden Ansprüche, **dadurch gekennzeichnet, dass** als Polymere ein Gemisch aus Ethylen/Vinylacetat-Copolymer und Polymeren des Vinylacetats vorgesehen ist.

## Claims

1. Solvent-free compound intended for coating metal sheets, for example body sheets of motor vehicles, as soundproofing and antidrumming compound and as protection against corrosion, which is capable at a temperature of 125°C of internally flow-coating hollow sections that have been preheated to 60 to 80 °C, and which contains 40 - 60 % wt of bitumen, 0.5 - 10 % wt of polymers, 5 - 20 % wt of a mixture of several waxes with a melting point in the range of 75°C to 105°C, 5 - 15 % wt of resin, 0.5 - 3 % wt of aluminium and 5 - 20 % wt of mica.

2. Compound according to Claim 1, **characterized in that** the compound contains up to 50% wt of filler materials such as chalk or sand, to reduce the mica content.

3. Compound according to Claims 1 or 2, **characterized in that** a mixture of distillation bitumen B15 and B180 is provided as bitumen, and the compound additionally contains up to 4% wt of mineral oil.

4. Compound according to at least one of the preceding claims, **characterized in that** a mixture of ethylene/vinyl acetate copolymer and polymers of vinyl acetate is provided as polymers.

## Revendications

1. Pâte exempte de solvant, destinée à l'enduction de tôles, par exemple de tôles de carrosseries de véhicules automobiles et servant à l'insonorisation, à la suppression du vrombissement et à la protection contre la corrosion, qui peut remplir des profilés creux préalablement chauffés à une température allant de 125 °C jusqu'à 60 à 80 °C et qui contient 40-60% en poids de bitume, 0,5-10% en poids de polymères, 5-20% en poids d'un mélange de plusieurs cires qui présentent un point de fusion dans l'intervalle de 75 °C à 105 °C, 5-15% en poids de résine, 0,5-3% en poids d'aluminium, ainsi que 5-20% en poids de mica.

2. Pâte selon la revendication 1, **caractérisée en ce que**, pour réduire la proportion de mica, la pâte contient jusqu'à 50 % en poids de charges telles que de la craie ou du sable.

3. Pâte selon les revendications 1 ou 2, **caractérisée en ce qu'**il est prévu, comme bitume, un mélange de bitumes de distillation B15 et B 180 et la pâte contient en supplément jusqu'à 4% en poids d'huile minérale.

4. Pâte selon au moins une des revendications précédentes, **caractérisée en ce qu'**il est prévu comme polymères un mélange de copolymère éthylène/acétate de vinyle et de polymères de l'acétate de vinyle.
